# EUROPÄISCHE PATENTANMELDUNG

(11) **EP 1 039 256 A1**
(43) Veröffentlichungstag der Anmeldung: **27.09.2000**
(21) Anmeldenummer: 00200999.1
(22) Anmeldetag: 20.03.2000
(51) Int. Cl.: F28D 20/00

(54) **Warmwasserspeicher**

(30) Priorität: 23.03.1999 IT BZ990015
(71) Anmelder: Markart, Artur, 39040 Campo di Trens (BZ) (IT)
(72) Erfinder: Markart, Artur, 39040 Campo di Trens (BZ) (IT)
(74) Vertreter: Faraggiana, Vittorio, Dr. Ing.

(57) **Zusammenfassung**

Beschrieben wird ein Warmwasserspeicher, umfassend einen Speicher (1), der durch eine Wärmequelle (2) mit einem Wärmeträger über einen Anschluss (4) gespeist wird und mit mindestens einem Entnahmeanschluss (19) versehen ist.

Gemäß der Erfindung ist mindestens ein Anschluss (4,19 ) mit einem Schwebegefäß (8) verbunden, das derart bemessen ist, dass es im Wasser (21) auf einem bestimmten Niveau in Abhängigkeit der vom Wasser (21) aufgewiesenen Temperatur schwebend bleibt und das mit dem im Speicher (1) enthaltenen Wasser (21) verbunden ist.

## Beschreibung

Die vorliegende Erfindung bezieht sich auf einen Warmwasserspeicher nach dem Oberbegriff des Anspruchs 1.

Bei den verschiedenen Warmwasserspeichern bekannter Art besteht sowohl für das Brauchwasser als auch bei der Speisung von Heizanlagen das Problem, dass das von einer Heizquelle kommende Wasser mit dem im Speicher selbst schon enthaltenen Wasser vermischt wird, wobei die Temperatur des gesamten Wassers im Speicher selbst gleichförmig verteilt wird. So könnte sich am Ausgang bei der Wasserentnahme das Wasser auf einer zu niedrigen Temperatur befinden, was sich nachteilig vor allem dann auswirkt, wenn das Wasser für den Verbrauch verwendet wird: Dabei lässt der Verbraucher, um das Wasser bei der gewollten Temperatur zur Verfügung zu haben, das Wasser fließen ohne eine annehmbare Temperatur zu erreichen, mit der Folge, dass Wasser und Energie verloren gehen.

Es sind schon Anlagen bekannt, die Warmwasserspeicher umfassen, wo das Wasser auf verschiedenen Niveaus in den Speicher derart eingespeist wird, dass es mit einer Temperatur im Speicher ankommt, die möglichst in der Nähe der Temperatur des Wassers liegt, das auf dieser Höhe im Speicher liegt. Diese Einspeisung ist jedoch sehr starr gehalten, da die Eingänge des von der Wärmequelle kommenden Wassers auf Niveaus liegen, die mit Abstand von einander liegen, so dass die Temperaturdifferenz zwischen dem von der Wärmequelle kommenden Wasser und dem Wasser im Speicher noch derart groß ist, dass im Speicherwasser Verwirbelungen verursacht werden.

Die Aufgabe der vorliegenden Erfindung liegt daher darin, die Nachteile des bekannten Standes der Technik zu vermeiden und einen Warmwasserspeicher vorzuschlagen, der in der Lage ist, einen Temperaturgradient des von einer Wärmequelle kommenden Wassers gegenüber darunter liegenden, kälteren Wasserschichten derart weitgehend zu vermeiden, dass die Verwirbelung auf ein Mindestmaß herabgesetzt wird und die Temperatur des eingespeisten Wassers im wesentlichen auf derselben Temperatur des Wassers liegt, das sich schon im Speicher befindet, d. h. eine Temperatur aufweist, die im wesentlichen gleich jener des Wassers im Speicher ist.

Diese Aufgabe wird gemäß der Erfindung bei einem Warmwasserspeicher durch die kennzeichnenden Merkmale des Anspruchs 1 gelöst.

Bei Verwendung eines Schwebegefäßes , das derart bemessen ist, dass es auf einem bestimmten Niveau in Abhängigkeit der Temperatur, die das Wasser im Speicher aufweist, im Wasser schwebend bleibt, wird sich das Schwebegefäß selbst im gespeicherten Wasser je nach der Temperatur des von der Wärmequelle selbst kommenden Wassers verstellen. Somit wird das Wasser der Wärmequelle in den Speicher mit einem Mindestmass an Temperaturdifferenz vor allem gegenüber den darunter liegenden Schichten eingespeist, wobei die oben beschriebenen Nachteile vermieden werden und das Problem des Standes der Technik auf hervorragende Weise gelöst wird.

In einer Ausführungsform besteht das Schwebegefäß aus einer unteren Wanne, die durch ein oben offenes Steigrohr derart durchdrungen wird, dass das Wasser der Wanne von oben zugeführt wird. In die Wanne taucht, das Steigrohr umgebend, kopfüber eine Glocke ein, die mit der Wanne eine Durchführung bildet, durch die das Wasser nach oben steigen kann, um zwischen der Wanne und der Glocke im Bereich des oberen Randes der Wanne auszutreten und in den Speicher einzutreten.

In einer Ausbildung ist der Himmel der Glocke für im Wasser enthaltene/s Luft bzw. Gas durchlässig, so dass der Austritt nach oben, z. B. über ein Entlüftungsröhrchen ermöglicht wird.

In einer weiteren Ausbildung ist der Boden der Glocke durch einen oberen Deckel abgeschlossen, der mit dem Glockenboden eine Kammer bildet, welche die über den Glockenboden filtrierte Luft aufnimmt.

In einer weiteren Ausbildung ist die Speiseleitung ein Schlauch, der zwischen dem Eingangsanschluss und dem Schwebegefäß derart hängt, dass dieser den Bewegungen des im Wasser des Speichers schwebenden Gefäßes folgen kann.

Weitere Merkmale gehen aus den weiteren Ansprüchen hervor.

Weitere Einzelheiten und Merkmale sind der nachfolgenden Beschreibung einer in der beigefügten Zeichnung dargestellten, bevorzugten Ausführungsform entnehmbar. Es zeigen:
Figur 1 schematisch einen Warmwasserspeicher im Vertikalschnitt,
Figur 2 einen Querschnitt durch ein Schwebegefäß.

In den Figuren ist mit der Bezugsziffer 1 insgesamt ein Warmwasserspeicher angegeben. Er wird von einer Warmwasserquelle 2 gespeist, die zum Beispiel eine Solaranlage, ein Wärmetauscher oder eine beliebige andere Quelle sein könnte. Die Quelle 2 ist über eine Pumpe 3 mit einem Eintrittsanschluss verbunden, der auf einer bestimmten Höhe in der Wand 5 des Speichers angebracht ist.

Mit dem Anschluss 4 ist innerhalb des Speichers eines der Enden eines Schlauches 6 befestigt, dessen anderes Ende über einen Anschluss mit dem Eingang eines im allgemeinen mit der Bezugsziffer 8 angegebenen Schwebegefäßes verbunden ist.

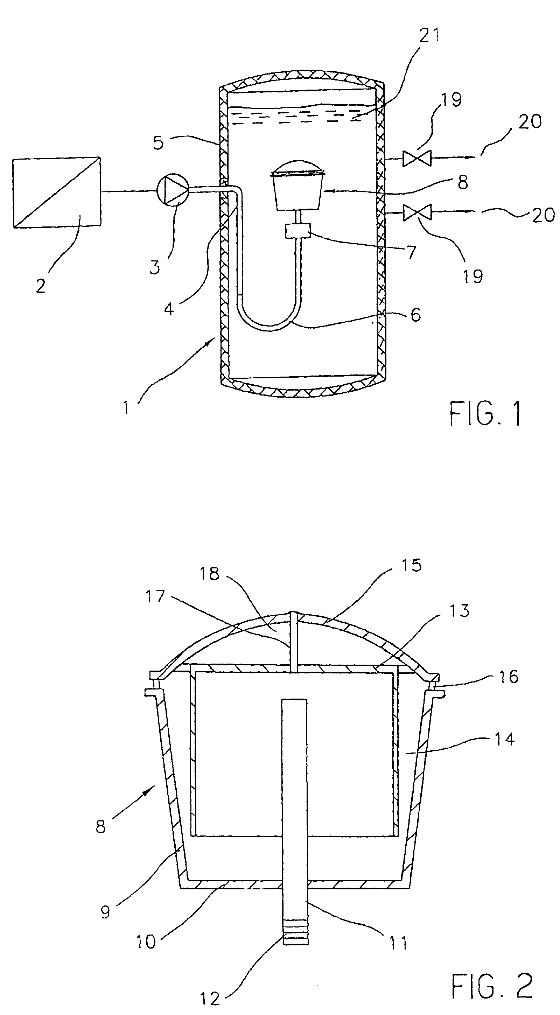

Wie in Figur 2 dargestellt umfasst das Gefäß 8 eine Wanne 9, deren Boden 10 durch ein Steigrohr 11 durchdrungen ist, dessen unteres Ende beispielsweise mit einem Außengewinde 12 versehen ist, um mit dem Anschluss 7 des Schlauches 6 verbunden zu werden, und dessen oberes Ende mit Abstand von einem Boden 13 einer kopfüber stehenden Glocke 14 endet, welche die Steigleitung 11 umgibt und mit ihrem Boden 13 an einem Deckel 15 befestigt ist, dessen Rand über Stege 16 mit dem oberen Rand der Wanne 9 derart verbunden ist, dass zwischen dem Deckel 15 und der Wanne 9 zwischen den Stegen ein Durchgang für Wasser gebildet wird, das 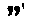 siphonartig" vom Steigrohr 11 um den unteren Rand der Glocke 14 und den zwischen Glocke und Wand des Wanne 9 gebildeten Zwischenraum hindurch fließt.

Zwischen dem Boden 13 der Glocke 14 und dem Innenteil des Deckels 15 ist eine Kammer 18 gebildet. Zweckmäßigerweise ist der Außenraum des Deckels über ein Entlüftungsröhrchen 17 mit dem Inneren der Wanne 9 verbunden, um Luft bzw. Gas, jedoch nicht Wasser hindurch zu lassen.

Der Speicher 1 ist schließlich auf bekannte Art und Weise mit Entnahmeventilen 19 versehen, die mit in 20 angedeuteten Verbrauchern verbunden sind.

Es ist klar, dass das Schwebegefäß 8 aus einem derartigen Werkstoff und derart bemessen sein wird, dass es im Wasser auf einem bestimmten Niveau bei einer bestimmten Temperatur schwebend gehalten wird, das heißt, das Gewicht der schwebenden Gesamtmasse muss gleich dem Auftrieb sein.

Zahlreiche Varianten und Abänderungen können vorgenommen werden, ohne den Schutzbereich der vorliegenden Erfindung zu verlassen:

Um das Gewicht des Schlauches 6 zu berücksichtigen, könnte dieser an Schwimmkörpern aufgehängt sein. Es wäre auch denkbar, das erfindungsgemäße Gefäß auch für die Entnahme von Warmwasser zu verwenden, wobei das Gefäß auf die Höhe innerhalb des Wassers gebracht wird, die einer bestimmten Wassertemperatur entspricht.

## Patentansprüche

1. Warmwasserspeicher, umfassend einen Speicher (1), der durch eine Wärmequelle (2) mit einem Wärmeträger über einen Anschluss (4) gespeist wird und mit mindestens einem Entnahmeanschluss (19) versehen ist, dadurch gekennzeichnet, dass mindestens ein Anschluss (4, 19 ) mit einem Schwebegefäß (8) verbunden ist, das derart bemessen ist, dass es im Wasser (21) auf einem bestimmten Niveau in Abhängigkeit der vom Wasser aufgewiesenen Temperatur auf einem bestimmten Niveau schwebend bleibt und das mit dem im Speicher (1) enthaltenen Wasser verbunden ist.

2. Warmwasserspeicher nach Anspruch 1, dadurch gekennzeichnet, dass das Schwebegefäß (8) aus einer unteren Wanne (9, 10) besteht, die durch ein oben offenes Steigrohr (11) derart durchdrungen wird, dass das Wasser der Wanne (9, 10) von oben zugeführt wird, wobei in die Wanne(9, 10), das Steigrohr (119 umgebend, kopfüber eine Glocke (14) eintaucht, die mit der Wanne eine Durchführung bildet, durch die das Wasser nach oben steigen kann, um zwischen der Wanne und der Glocke im Bereich des oberen Randes der Wanne auszutreten und in den Speicher einzutreten.

3. Warmwasserspeicher nach den vorstehenden Ansprüchen, dadurch gekennzeichnet, dass der Himmel der Glocke (13, 14) über ein Entlüftungsröhrchen (17) mit dem Inneren des Speichers (17) verbunden ist.

4. Warmwasserspeicher nach den vorstehenden Ansprüchen, dadurch gekennzeichnet, dass der Boden (13) der Glocke oben durch einen Deckel (15) abgeschlossen, der mit dem Glockenboden eine Kammer bildet.

5. Warmwasserspeicher nach den vorstehenden Ansprüchen, dadurch gekennzeichnet, dass die Speiseleitung ein Schlauch (6) ist, der zwischen dem Anschluss (4, 20) und dem Schwebegefäß (8).

6. Warmwasserspeicher nach den vorstehenden Ansprüchen, dadurch gekennzeichnet, dass die Warmwasserquelle ein Wärmetauscher ist.
